# FASCICULE DE BREVET EUROPEEN

(11) **EP 0 491 412 B1**
(45) Date de publication et mention de la délivrance du brevet: **24.01.1996**
(21) Numéro de dépôt: 91203157.2
(22) Date de dépôt: 03.12.1991
(51) Int. Cl.: D03J 1/00, B65H 19/12

(54) **Dispositif de fixation d'un élément dans un bâti**
Vorrichtung zum Fixieren eines Elementes in ein Gestell
Fixation device for an element in a frame

(30) Priorité: 17.12.1990 BE 9001206
(43) Date de publication de la demande: 24.06.1992
(73) Titulaire: Picanol N.V., B-8900 Ieper (BE)
(72) Inventeur: Lefever, Bart, B-8900 Ieper (BE); Ostyn, Geert, B-8890 Moorslede (BE)
(74) Mandataire: Donné, Eddy

(56) Documents cités:
- EP-A- 0 360 753
- GB-A- 769 302

## Description

La présente invention est relative à un dispositif permettant de fixer un élément dans un bâti.

Ce dispositif est en premier lieu destiné à fixer des éléments amovibles, qui sont dotés de bouts d'arbres, dans des machines textiles, notamment pour la fixation d'ensouples, que ce soit d'ensouples de chaîne ou de tissu, de contrôleurs de chaîne, de guide-cadres et analogues dans des machines à tisser.

On sait que, dans les machines à tisser, l'ensouple de chaîne, l'ensouple de tissu, le contrôleur de chaîne, les guide-cadres et encore un certain nombre de pièces sont fixés de part et d'autre du bâti de la machine à tisser à l'aide de bouts d'arbres. On fait usage en l'occurrence de manière classique de paliers qui sont bloqués à l'aide de chapeaux de paliers. Les chapeaux de paliers sont vissés sur les paliers à l'aide de boulons. Cette forme de réalisation connue présente cependant l'inconvénient qu'il est toujours nécessaire de disposer d'un outillage indispensable et que cela exige pas mal de temps pour desserrer, respectivement, resserrer, la fixation.

Du document EP-A-0 360 753 est connu un dispositif de fixation d'un élément dans un bâti, qui consiste en un verrouillage constitué par un levier pouvant coopérer avec un siège pour ledit élément. Bien que ce dispositif soulève certains problèmes, il montre des inconvénients en ce que le levier ne peut pas être actionné par le mouvement hors du siège dudit élément, ce qui rend difficile l'automatisation de la mise en place de tels éléments dans ledit siège.

La présente invention concerne un dispositif permettant de fixer un élément dans un bâti qui ne présente pas l'inconvenient précité.

La présente invention a également pour objet un dispositif caractérisé par une structure simple faisant usage de peu de pièces.

Afin d'atteindre ces objectifs, la présente invention concerne un dispositif de fixation d'un élément dans un bâti, comprenant un siège, une voie d'admission par laquelle l'élément à fixer peut être placé dans le siège, et un élément rotatif constituant un mécanisme de verrouillage, formé par un levier qui peut pivoter entre une première position, qui est une position de verrouillage, et une deuxième position, qui est une position de libération de l'élément à fixer, ledit levier présentant deux extrémités, dont une première extrémité forme des moyens de verrouillage, cette première extrémité étant de telle construction que, dans ladite première position du levier, cette extrémité se trouve dans la voie d'admission, et que, dans ladite seconde position, cette première extrémité se trouve hors de la voie d'admission, caractérisé en ce que dans ladite seconde position la seconde extrémité se trouve dans la voie d'admission et en ce que cette seconde extrémité peut coopérer avec l'élément à fixer lorsque cet élément est retiré dudit siège, en assurant que, après l'enlèvement de l'élément à fixer, ledit élément rotatif se trouve dans la première position.

Dans la forme de réalisation préférée, l'élément rotatif est constitué d'un levier qui est fixé au bâti de manière à pouvoir tourner, une roulette de pression étant prévue à une de ses extrémités pour venir en contact avec l'élément placé dans le siège.

L'invention est revendiquée dans les revendications 1 à 11.

Les autres avantages de la présente invention seront décrits ci-après.

On se référera à présent à la description d'une forme de réalisation préférée à titre d'exemple, sans aucun caractère limitatif, sur base des dessins ci-annexés dans lesquels :
La figure 1 représente schématiquement un métier à tisser qui est équipé d'un dispositif selon l'invention, ainsi que l'appareil de transport;
La figure 2 est une vue à plus grande échelle de la partie qui est désignée dans la figure 1 par F2;
La figure 3 est une vue selon la flèche F3 de la figure 2; et
Les figures 4 à 7 représentent diverses positions du dispositif de la figure 2.

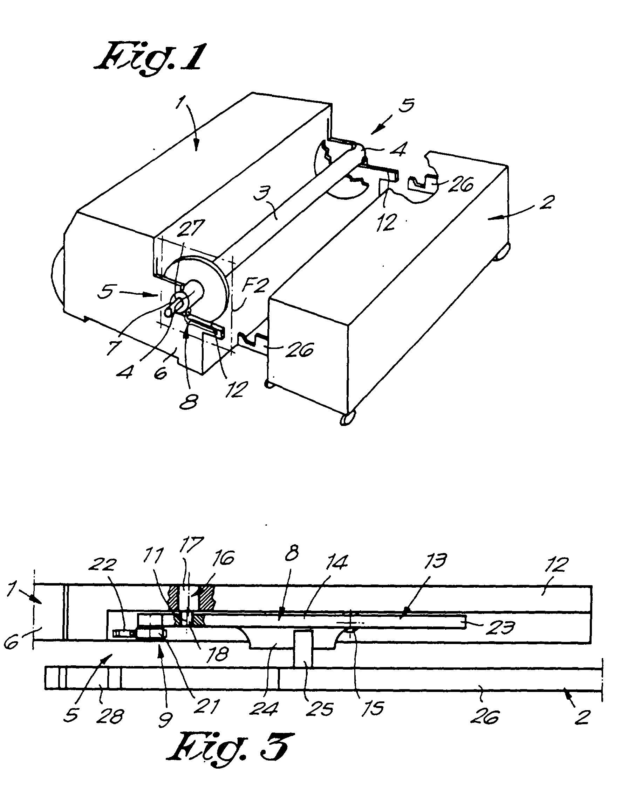

On a représenté schématiquement dans la figure 1 un métier à tisser 1 et un appareil de transport 2 pour mettre en place et/ou retirer un élément amovible, dans ce cas une ensouple de chaîne 3. L'ensouple de chaîne 3 présente, comme cela est connu, aux deux extrémités, un arbre ou un bout d'arbre 4 grâce auquel elle peut être fixée dans des dispositifs 5 du bâti 6.

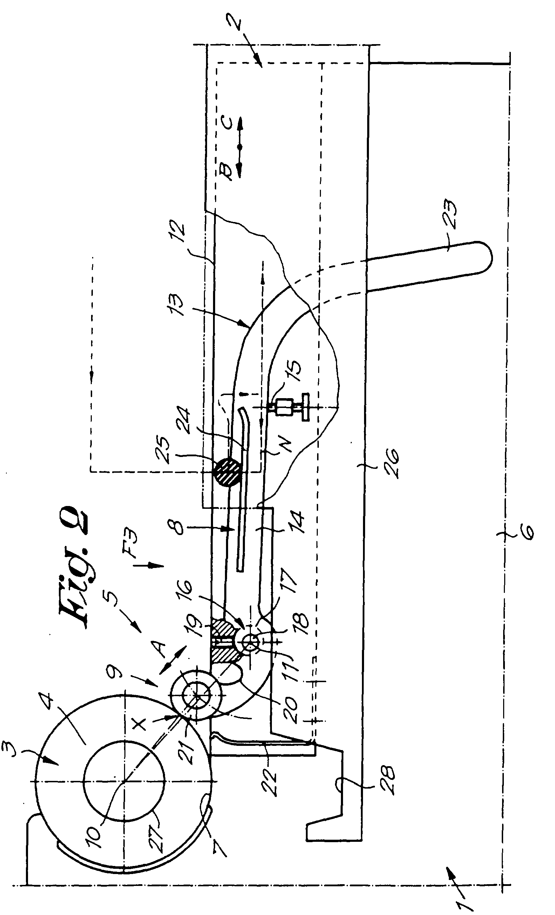

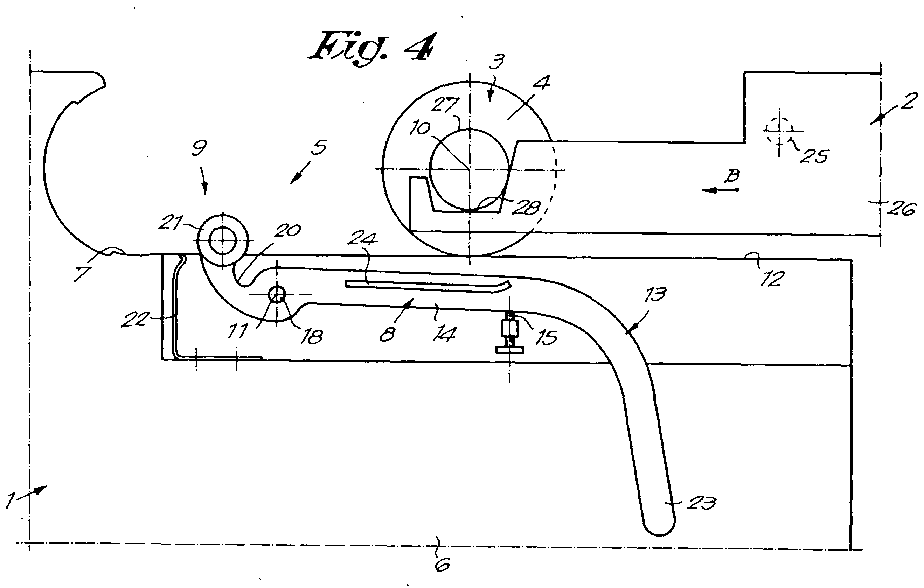

Les dispositifs 5 utilisés en l'occurrence sont constitués chacun, comme représenté dans les figures 2 et 3, d'un siège 7 pour l'arbre à fixer 4 et d'un élément rotatif 8 dont une extrémité 9 peut coopérer avec l'arbre précité 4 afin de fixer celui-ci dans le siège 7, l'extrémité 9 étant positionnée en sorte de former un mécanisme de décentrement vis-à-vis du centre 10 du siège 7 et vis-à-vis du pivot 11 de l'élément rotatif 8.

Le siège 7 s'étend au maximum sur 180° en sorte que, moyennant la rotation latérale de l'élément rotatif 8, l'arbre 4 puisse toujours être retiré du siège 7 ou y être mis en place. Le siège 7 se trouve à l'extrémité d'une voie d'admission 12, telle qu'une surface d'appui, le long de laquelle l'arbre 4 peut être roulé ou mis en place dans le siège 7.

L'élément rotatif 8 est constitué d'un levier qui est doté d'un bras de levier 14 à l'extrémité 13 qui se trouve en regard de l'extrémité 9 précitée.

Dans la première position ou position de verrouillage qui est représentée dans la figure 2, la rotation de l'élément rotatif 8 est limitée à l'aide d'une butée 15 réglable de préférence. Comme indiqué, cette butée 15 est montée sous le bras de levier 14. Dans la position où le bras de levier 14 vient en contact avec la butée 15, le point X où l'extrémité 9 coopère avec l'arbre 4 se trouve précisément après la ligne de liaison entre le centre 10 et le pivot 11, de manière générale en sorte que, lorsque l'arbre 4 est forcé hors de son siège 7, le bras de levier 14 soit pressé avec une force plus grande sur la butée 15 et que le dispositif reste verrouillé par suite.

La position du pivot 11 est de préférence réglable, par exemple à l'aide d'une excentrique ajustable 16. Cela permet de faire glisser l'extrémité 9 de l'élément rotatif 8 dans la direction A, en sorte que cette extrémité se presse contre l'arbre 4 avec plus ou moins de force.

L'excentrique ajustable 16 est constituée, comme indiqué dans les figures 2 et 3, d'un arbre 17 qui peut tourner dans le bâti 16 et qui est doté d'un arbre 18 monté excentrique sur lequel l'élément rotatif 8 est monté en sorte que la ligne d'axe de cet arbre 18 forme le pivot précité 11. L'arbre 17 peut être fixé vis-à-vis du bâti 6 dans une position angulaire quelconque à l'aide d'une vis 19.

Il est clair que l'élément rotatif 8 est placé en sorte qu'il soit déformé de manière élastique entre le pivot 11 et l'extrémité 9 au cours du verrouillage. Pour permettre une déformation élastique, l'élément rotatif 8 a une forme courbe entre le pivot 11 et l'extrémité 9. En outre, une partie affaiblie 20 peut être intégrée à cette partie pour augmenter l'élasticité et permettre d'ouvrir et de fermer le dispositif.

Pour limiter la force à exercer lors de la fermeture ou de l'ouverture, il est prévu à l'extrémité 9 de l'élément rotatif 8, de préférence, un rouleau ou une roulette 21 qui est fixé(e) de manière à pouvoir tourner. Cette roulette 21 permet également à l'arbre 4 de tourner sans un trop grand frottement vis-à-vis de l'élément rotatif 8.

Comme indiqué dans les figures, le pivot 11 est disposé en dessous de la voie d'admission 12. L'élément rotatif 8 est situé en sorte que, dans la première position, à savoir la position de verrouillage, l'extrémité 9 se trouve dans la voie d'admission 12, mais que l'extrémité 13 se trouve en dessous de la voie d'admission 12. Dans la deuxième position, à savoir la position de déverrouillage, l'extrémité 9 se trouve en dessous de la voie d'admission 12, tandis que l'extrémité 13 se trouve dans la voie d'admission 12.

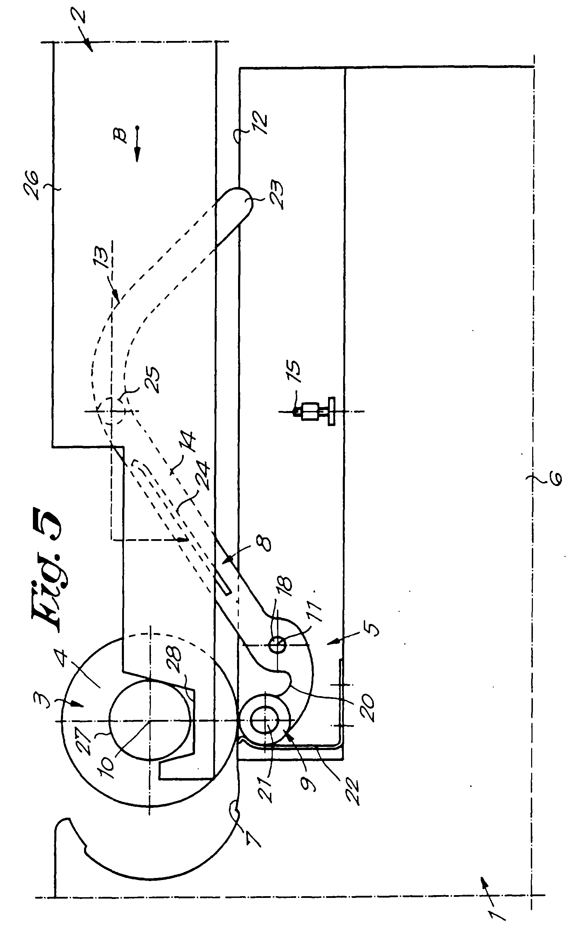

Par ailleurs, on peut prévoir des moyens 22 à l'aide desquels l'élément rotatif 8 peut être retenu dans sa position de déverouillage. Comme indiqué dans la figure 4, ces moyens 22 sont constitués par exemple d'un ressort à lame courbe derrière lequel l'extrémité 9, et plus particulièrement la roulette 21, peut s'accrocher.

Le bras de levier 14 comporte également un guide 23 dont l'objet ressortira de la suite de la description. Ce guide 23 peut également jouer le rôle de poignée. Ce guide 23 est de préférence disposé en sorte qu'il parvienne encore en dessous de la voie d'admission 12 lorsque l'élément rotatif 8 se trouve dans la seconde position mentionnée.

Comme indiqué dans la figure 3, le bras de levier 14 est doté latéralement d'un guide 24 qui peut coopérer avec un tourillon élastique 25 qui est monté sur le bras de transport 26 de l'appareil de transport 2.

L'élément amovible 3 est doté à ses extrémités de moyens 27, tels que des bouts d'arbres, par lesquels cet élément 3 peut être fixé. Ces moyens 27 peuvent en l'occurrence coopérer avec les ouvertures de préhension 28 des bras de transport 26.

Le fonctionnement du dispositif sera à présent décrit en se référant aux diverses positions qui sont représentées dans les figures 2, 4, 5, 6 et 7.

Lors de la mise en place d'une nouvelle ensouple de chaîne 3 ou d'une ensouple analogue, l'arbre 4, tel que représenté dans la figure 4, est soumis à un déplacement ou à un roulement dans la direction B sur la surface d'appui de la voie d'admission 12, respectivement, sur les surfaces d'appui, en sorte de passer successivement par les positions des figures 4, 5 et 2.

Dans le cas où l'élément 3 est mis en place à l'aide du dispositif de transport 2, les tourillons élastiques 25 passent librement par dessus les éléments rotatifs 8 au cours du déplacement B. Lorsque l'arbre 4 se trouve dans le siège 7, les bras de transport 26 sont déplacés vers le bas jusque dans la position de la figure 2. Dans cette optique, les tourillons élastiques 25 montés sur chacun des deux bras 26 pressent sur les guides 24 des éléments rotatifs 8, en sorte que chaque bras de levier 14 soit pressé sur sa butée respective 15 et que l'élément 3 soit par suite verrouillé dans les sièges 7.

Ensuite, les bras de transport 26 sont retractés dans la direction C de telle sorte que l'appareil de transport 2 puisse se déplacer vers un autre endroit.

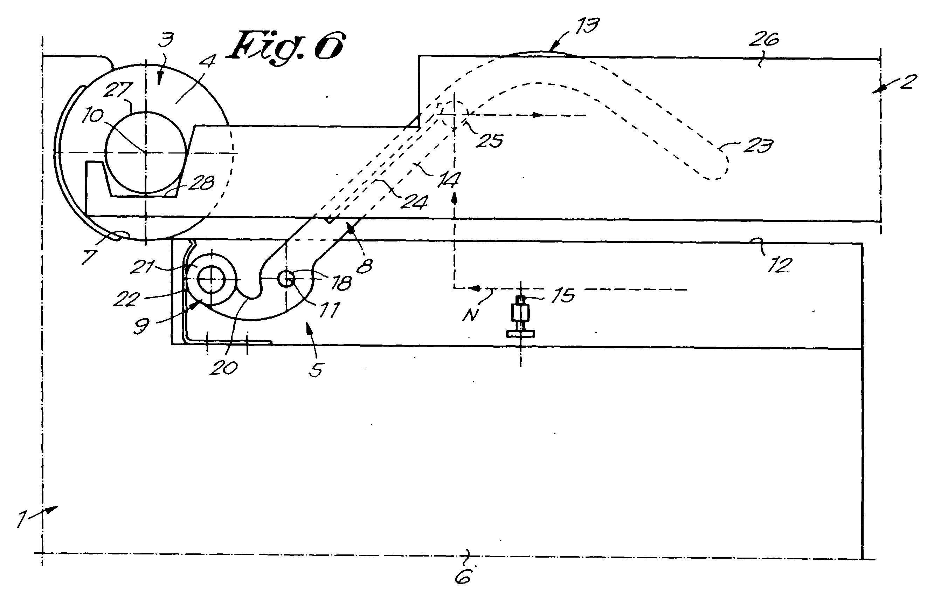

Pour retirer l'élément 3 du siège 7, les éléments rotatifs 8 sont soumis à rotation, par exemple jusque dans la position de la figure 5, de telle sorte que l'extrémité 9 soit bloquée derrière le ressort à lame 22. Ensuite, l'arbre 4 est soumis à un déplacement ou à un roulement hors du siège 7 sur la surface d'appui de la voie d'admission 12 en sorte que l'élément 3 puisse être retiré de cette surface d'appui. Lors du déplacement ou du roulement des arbres 4 de la surface d'appui 12, ces arbres 4 viennent en contact avec le bras de levier 14 et, par suite, les éléments rotatifs 8 retombent sur les butées 15 et se déplacent dans une position telle que représentée dans la figure 4. Les arbres 4, et donc l'élément amovible 3, peuvent être ensuite acheminés dans la direction C librement.

Dans le cas où l'on fait usage de l'appareil de transport 2 pour ouvrir le dispositif 5 et retirer l'élément 3, les bras de transport 26 sont présentés à une hauteur vis-à-vis du métier à tisser 1 comme indiqué dans la figure 2. En déplaçant les bras de transport 26 dans la direction B, ces bras de transport 26 sont amenés jusque dans la position de la figure 2. On remarquera à cet effet que les tourillons élastiques 25 passent à présent sous les guides 24, plus particulièrement dans la direction indiquée N.

Pour retirer l'élément 3, les bras de transport 26 sont relevés jusque dans la position qui est représentée dans la figure 6. A cet effet, les tourillons 25 viennent en contact avec la partie inférieure des guides 24, si bien que les éléments rotatifs 8 sont déverrouillés et sont soumis à une rotation jusque dans la position de la figure 6.

Ensuite, l'élément 3 peut être tiré du siège 7 en rétractant les bras de transport 26. Lors du retrait de l'élément 3, les extrémités 9 des éléments 8 ne constituent pas une gêne, car, en premier lieu, lors du déplacement des bras de transport 26 dans la direction C, les éléments rotatifs 8 sont retenus par les tourillons 25 qui coopèrent avec les guides 24. Si les tourillons 25 coopèrent suffisamment longtemps avec les guides 24, les ressorts à lames 22 sont superflus. Si cependant, les guides 24 sont assez courts, les éléments rotatifs 8 peuvent être bloqués dans leur position de déverrouillage à l'aide des ressorts à lame 22 ou analogues.

Il est clair que, lorsqu'ils continuent à se déplacer dans la direction C, les éléments rotatifs 8 retournent à la position de la figure 4 avec cet avantage que les dispositifs 5 reviennent toujours dans une position où un nouvel élément 3 peut être mis en place automatiquement dans les sièges 7.

Il est à remarquer que les bras de transport 26 se trouvent dans les figures 5 et 6 à la même hauteur avec cet avantage que ces bras de transport 26 ne doivent opérer qu'à deux hauteurs.

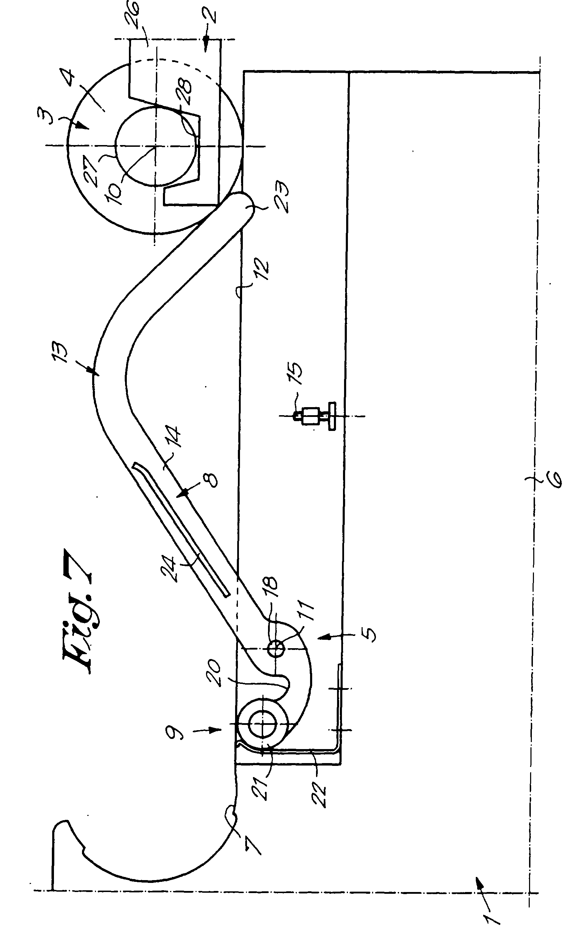

Dans le cas où l'élément rotatif 8 de l'un des dispositifs 5, par exemple, à la suite d'une intervention manuelle, se trouve dans une position telle que représentée dans la figure 7, lors de la mise en place d'un élément 3, son arbre 4 viendra en contact avec le guide 23, si bien que l'élément rotatif 8 sera automatiquement soumis à rotation jusque dans la position de la figure 4.

Dans le cas où le ressort à lame 22 est placé en sorte que l'élément rotatif 8, lors de la mise en place d'un arbre 4, ne soit pas forcé jusque derrière le ressort à lame 22 ou dans le cas où il n'y a pas de ressort à lame 22, le dispositif, en fonction de la géométrie et du poids de l'élément rotatif 8, viendra dans la position de verrouillage de manière plus ou moins automatique.

Il est clair que les bouts d'arbre ou les arbres 4 précités ne doivent pas nécessairement avoir une forme ronde.

La présente invention n'est en aucune manière limitée à la forme de réalisation décrite à titre d'exemple et représentée dans les figures; un dispositif du même type pour la fixation d'un élément dans un bâti pourrait être réalisé dans diverses variantes dans le cadre de l'invention.

## Revendications

1. Dispositif de fixation d'un élément dans un bâti, comprenant un siège (7), une voie d'admission (12) par laquelle l'élément à fixer (3) peut être placé dans le siège (7), et un élément rotatif (8) constituant un mécanisme de verrouillage, formé par un levier qui peut pivoter entre une première position, qui est une position de verrouillage, et une deuxième position, qui est une position de libération de l'élément à fixer (3), ledit levier présentant deux extrémités (9,13), dont une première extrémité (9) forme des moyens de verrouillage, cette première extrémité (9) étant de telle construction que, dans ladite première position du levier, cette extrémité (9) se trouve dans la voie d'admission (12), et que, dans ladite seconde position, cette première extrémité (9) se trouve hors de la voie d'admission (12), caractérisé en ce que dans ladite seconde position la seconde extrémité (13) se trouve dans la voie d'admission (12) et en ce que cette seconde extrémité (13) coopère avec l'élément à fixer (3) lorsque cet élément (3) est retiré dudit siège (7), en assurant que, après l'enlèvement de l'élément à fixer (3), ledit élément rotatif (8) se trouve dans la première position.

2. Dispositif selon la revendication 1, caractérisé en ce que dans ladite première position, l'élément rotatif (8) forme contact avec l'élément à fixer (3) à un certain point (X), ce point (X) étant situé un peu après la ligne de liaison entre le centre (10) du siège (7) et le pivot (11) de l'élément rotatif (8) de sorte que soit formé un mécanisme de décentrement.

3. Dispositif selon la revendication 1 ou 2, caractérisé en ce que le pivot (11) de l'élément rotatif (8) est situé sous la voie d'admission (12).

4. Dispositif selon l'une quelconque des revendications 1 à 3, caractérisé en ce que l'élément rotatif (8) dans sa première position coopère avec une butée (15).

5. Dispositif selon l'une quelconque des revendications 1 à 4, caractérisé en ce que la partie de l'élément rotatif (8) qui s'étend entre le pivot (11) et l'extrémité (9) destinée à coopérer avec l'élément à fixer (3) peut être déformée élastiquement.

6. Dispositif selon l'une quelconque des revendications 1 à 5, caractérisé en ce que, à l'extrémité (9) de l'élément rotatif (8) qui peut coopérer avec un élément (3) monté dans le siège (7), est monté une roulette (21).

7. Dispositif selon l'une quelconque des revendications 1 à 6, caractérisé en ce qu'il comporte des moyens (22) par lesquels l'élément rotatif (8) peut être retenu dans la seconde position précitée.

8. Dispositif selon l'une quelconque des revendications 1 à 7, caractérisé en ce que la seconde extrémité (13) précitée est constituée principalement d'un bras de levier (14).

9. Dispositif selon la revendication 8, caractérisé en ce que le bras de levier (14) comporte un guide (23) qui peut coopérer avec l'élément à fixer (3) lorsque cet élément (3) est déplacé vers le siège (7) via la voie d'admission (12).

10. Dispositif selon la revendication 4, caractérisé en ce que la butée (15) est réglable.

11. Dispositif selon l'une quelconque des revendications 1 à 10, caractérisé en ce que la position du pivot (11) de l'élément rotatif (8) est réglable.

## Patentansprüche

1. Vorrichtung zum Fixieren eines Elements in einem Gestell, umfassend eine Fassung (7), eine Zugangsbahn (12), durch die das zu fixierende Element (3) in der Fassung (7) plaziert werden kann, und ein drehbares Element (8), das einen verriegelungsmechanismus darstellt und durch einen Hebel gebildet wird, der zwischen einer ersten Position, die eine Verriegelungsposition ist, und einer zweiten Position, die eine Position der Freigabe des zu fixierenden Elements (3) ist, schwenken kann, wobei besagter Hebel zwei Enden (9, 13) aufweist, wobei ein erstes Ende (9) Verriegelungsmittel bildet, wobei dieses erste Ende (9) von solcher Konstruktion ist, daß, in besagter erster Position des Hebels, dieses Ende (9) sich in der Zugangsbahn (12) befindet, und daß, in besagter zweiter Position, dieses erste Ende (9) sich außerhalb der Zugangsbahn (12) befindet, dadurch gekennzeichnet, daß in besagter zweiter Position das zweite Ende (13) sich in der Zugangsbahn (12) befindet und daß dieses zweite Ende (13) mit dem zu fixierenden Element (3) zusammenwirkt, während dieses Element (3) von besagter Fassung (7) zurückgezogen wird, derart, daß sichergestellt wird, daß, nach dem Entfernen des zu fixierenden Elements (3), besagtes drehbares Element (8) sich in der ersten Position befindet.

2. Vorrichtung gemäß Anspruch 1, dadurch gekennzeichnet, daß, in besagter erster Position, das drehbare Element (8) mit dem zu fixierenden Element (3) an einem bestimmten Punkt (X) in Kontakt kommt, wobei dieser Punkt (X) etwas hinter der Verbindungslinie zwischen dem Mittelpunkt (10) der Fassung (7) und dem Drehpunkt (11) des drehbaren Elements (8) angebracht ist, derart, daß ein Exzenterklinkmechanismus gebildet wird.

3. Vorrichtung gemäß Anspruch 1 oder 2, dadurch gekennzeichnet, daß der Drehpunkt (11) des drehbaren Elements (8) unter der Zugangsbahn (12) gelegen ist.

4. Vorrichtung gemäß einem der Ansprüche 1 bis 3, dadurch gekennzeichnet, daß das drehbare Element (8) in seiner ersten Position mit einem Anschlag (15) zusammenwirkt.

5. Vorrichtung gemäß einem der Ansprüche 1 bis 4, dadurch gekennzeichnet, daß der Teil des drehbaren Elements (8), der sich zwischen dem Drehpunkt (11) und dem Ende (9), das zum Zusammenwirken mit dem zu fixierenden Element (3) bestimmt ist, erstreckt, elastisch verformt werden kann.

6. Vorrichtung gemäß einem der Ansprüche 1 bis 5, dadurch gekennzeichnet, daß, am Ende (9) des drehbaren Elements (8), das mit einem in der Fassung (7) montierten Element (3) zusammenwirken kann, ein Rädchen (21) montiert ist.

7. Vorrichtung gemäß einem der Ansprüche 1 bis 6, dadurch gekennzeichnet, daB sie Mittel (22) umfaßt, durch die das drehbare Element (8) in der vorgenannten zweiten Position festgehalten werden kann.

8. Vorrichtung gemäß einem der Ansprüche 1 bis 7, dadurch gekennzeichnet, daß das vorgenannte zweite Ende (13) hauptsächlich aus einem Hebelarm (14) besteht.

9. Vorrichtung gemäß Anspruch 8, dadurch gekennzeichnet, daß der Hebelarm (14) eine Führung (23) umfaßt, die mit dem zu befestigenden Element (3) zusammenwirken kann, während dieses Element (3) über die Zugangsbahn (12) zur Fassung (7) versetzt wird.

10. Vorrichtung gemäß Anspruch 4, dadurch gekennzeichnet, daß der Anschlag (15) regelbar ist.

11. Vorrichtung gemäß einem der Ansprüche 1 bis 10, dadurch gekennzeichnet, daß die Position des Drehpunkts (11) des drehbaren Elements (8) regelbar ist.

## Claims

1. Device for fixing an element in a frame, containing a seating (7), an entry (12) via which the element to be fixed (3) can be placed in the seating (7), and a rotating element (8) forming a locking mechanism, consisting of a lever which can pivot between a first position, which is a locking position, and a second position, which is a position in which the element to be fixed (3) is released, whereby the above-mentioned lever has two ends (9,13), of which one end (9) forms locking means, said first end (9) being designed such that, in said first position of the lever, this end (9) is situated in the entry (12), and that, in said second position, this first end (9) is situated outside the entry (12), characterized in that in said second position the second end (13) is situated in the entry (12) and in that this second end (13) works in conjunction with the element to be fixed (3) when said element (3) is withdrawn from the seating (7), so that, after the element to be fixed (3) has been removed, said rotating element (8) is situated in the first position.

2. Device according to claim 1, characterized in that in said first position, the rotating element (8) makes contact with the element to be fixed (3) at a certain point (X), whereby this point (X) is situated somewhat behind the connecting line between the centre (10) of the seating (7) and the pivot (11) of the rotating element (8), so that an off-centering mechanism is formed.

3. Device according to claim 1 or 2, characterized in that the pivot (11) of the rotating element (8) is situated under the entry (12).

4. Device according to any of claims 1 to 3, characterized in that the rotating element (8) works in conjunction with a stop (15) in its first position.

5. Device according to any of claims 1 to 4, characterized in that the part of the rotating element (8) which extends between the pivot (11) and the end (9) designed to work in conjunction with the element to be fixed (3) can be elastically deformed.

6. Device according to any of claims 1 to 5, characterized in that at the end (9) of the rotating element (8) which can work in conjunction with an element (3) mounted in the seating (7) is mounted a roller (21).

7. Device according to any of claims 1 to 6, characterized in that it contains means (22) with which the rotating element (8) can be held in the above-mentioned second position.

8. Device according to any of claims 1 to 7, characterized in that the above-mentioned second end (13) mainly consists of a lever arm (14).

9. Device according claim 8, characterized in that the lever arm (14) contains a guide (23) which can work in conjunction with the element to be fixed (3) when this element (3) is moved towards the seating (7) via the entry (12).

10. Device according claim 4, characterized in that the stop (15) can be adjusted.

11. Device according to any of claims 1 to 10, characterized in that the position of the pivot (11) of the rotating element (8) can be adjusted.
